# EUROPÄISCHE PATENTSCHRIFT

(11) **EP 1 286 743 B1**
(45) Veröffentlichungstag und Bekanntmachung des Hinweises auf die Patenterteilung: **02.11.2005**
(21) Anmeldenummer: 01940490.4
(22) Anmeldetag: 17.05.2001
(51) Int. Cl.: B01D 29/11, B01D 29/54, B01D 29/90, B01D 29/66

(54) **RÜCKSPÜLFILTER, INSBESONDERE FÜR DIE SCHMIERÖLFILTERUNG**
BACKFLUSH FILTER, IN PARTICULAR FOR FILTERING LUBRICANT OIL
FILTRE A LAVAGE A CONTRE-COURANT, NOTAMMENT DESTINE A LA FILTRATION D'HUILE LUBRIFIANTE

(30) Priorität: 19.05.2000 DE 10024401
(43) Veröffentlichungstag der Anmeldung: 05.03.2003
(73) Patentinhaber: Boll & Kirch Filterbau GmbH, 50170 Kerpen (DE)
(72) Erfinder: ROTT, Willi, 53332 Bornheim (DE); VIETEN, Wilhelm, 41844 Wegberg (DE); SINDORF, Heinz, 41569 Rommerskirchen (DE); LENNARTZ, Rüdiger, 50259 Pulheim (DE); KANDIAH, Sivagnanam, 50259 Pulheim (DE)
(74) Vertreter: Hennicke, Ernst Rüdiger
(86) Internationale Anmeldenummer: PCT/EP2001/005615
(87) Internationale Veröffentlichungsnummer: WO 2001/089659

(56) Entgegenhaltungen:
- EP-A- 0 656 223
- DE-A- 3 115 716
- DE-B- 1 299 284
- RU-C- 2 082 484
- US-A- 3 280 980
- US-A- 3 380 591

## Beschreibung

Die Erfindung betrifft einen Rückspülfilter insbesondere für die Schmieröl- und Brennstofffilterung.

Rückspülfilter werden bevorzugt zur Brennstoff- und Schmierölfiltration bei Maschinen, Motoren, Schiffsmotoren u.dgl. verwendet. Bei den entsprechenden Rückspülfiltern sind Filterkerzen innerhalb eines Filtergehäuses um eine Filterachse herum angeordnet und die zu reinigende Trübe strömt durch die offenen Einströmenden in den Innenraum der Filterkerze ein. Ein Teilstrom dieser Flüssigkeit gelangt durch die Filterkerzenwände hindurch als Filtrat in einen Filtratraum und wird von dort dem Filterauslaß zugeführt. Für den Dauerbetrieb der Rückspülfilter ist eine Reinigungseinrichtung vorgesehen, die mittels einer auf der Mittelachse des Filters angeordneten Drehwelle von Filterkerze zu Filterkerze gedreht wird, um die Schmutzpartikel, die sich an den Innenseiten der Filterkerzen ablagern, in eine Ablaßleitung abzuführen. Die Ablaßleitung ist mittels eines Ablaßventils wahlweise öffenbar oder verschließbar.

Die DE 31 15 716 C2 zeigt einen Rückspülfilter mit einseitig angeströmten Filterkerzen, bei dem die Reinigungseinrichtung ein Spülglied umfaßt, das sich innerhalb eines Gehäuseteils dreht, in dem Verzweigungskanäle für jede Filterkerze ausgebildet sind. Das Spülglied ist im Innern einer eine Vielzahl von radialen Öffnungen aufweisenden, zylindrischen Spültrommel angeordnet und schließt für den Rückspülbetrieb jeweils einen Verzweigungskanal an einen Spülkanal bzw. an ein Schlammablaßventil an. Der Herstellaufwand für das trommelförmige Spülglied und das Gehäuseteil mit den Verzweigungekanälen ist hoch.

Aus der EP 656 223 B1 ist ein Rückspülfilter bekannt, bei dem die Filterkerzen im Filtrierbetrieb von innen nach außen, im Rückspülbetrieb von außen nach innen durchströmt werden. Die oberen und unteren Einströmenden der Filterelemente sind offen und an Lochplatten angeordnet. An der unteren Lochplatte gleitet ein mit einer Schmutzabzugsleitung verbundenes L-förmiges Spülküken vorbei, um einzelne Filterelemente im Rückspülbetrieb reinigen zu können. Um das Druckniveau in der rückzuspülenden Filterkerze genau einstellen zu können, ist an dem dem Spülküken gegenüberliegenden Einströmende der Filterkerze ein mit dem Spülküken mitbewegtes Drosselelement angeordnet, mit dem dieses Einströmende im Rückspülbetrieb teilweise abgedeckt wird. Der Vorteil hierbei ist, daß die Reinigung einerseits durch das über die Filterwände in die Filterkerze zurückfließende Filtrat erfolgt, andererseits die an der Innenwand gelösten Schmutzpartikel mit Trübe in turbulenter Strömung im Querstrom zur Filtrierrichtung abgespült werden. Die Effektivität dieses Rückspülfilters ist hoch, der Verlust an gefilterter Flüssigkeit im Rückspülbetrieb vergleichsweise niedrig.

Aus der DE-AS 1 299 284 ist ein Rückspülfilter mit im Filtergehäuse um eine Drehwelle angeordneten, an beiden Enden offenen Filterkerzen, deren Innenraum im Filtrierbetrieb mit einer in den Rückspülfilter einströmenden Trübe beaufschlagbar ist, bekannt. Mittels einer Drehwelle wird eine Reinigungseinrichtung bewegt, die für die Einzel- oder Gruppenreinigung der Filterkerzen im Rückspülbetrieb wenigstens zwei über die Drehwelle mit einem Ablaßventil in Verbindung stehende Spülküken aufweist, wobei das erste Spülküken die in Lochplatten angeordneten oberen Filterkerzenenden überstreicht, und das andere Spülküken die in einer unteren Lochplatte angeordneten unteren Filterkerzenenden überstreicht. Befindet sich eine Filterkerze im Rückspülbetrieb, werden beide Einströmenden dieser Filterkerze durch die Spülküken an das Ablaßventil angeschlossen, so daß an beiden Einströmenden in entgegengesetzten Richtungen gleichzeitig rückgespült wird. Das Ablaßventil wird dabei nur dann betätigt, wenn beide Spülküken die Enden einer Filterkerze abdecken. Der Verlust an Filtrat im Rückspülbetrieb ist hoch.

Ein Rückpülfilter gemäß dem Oberbegriff von Anspruch 1 ist aus der RU 2082484 bekannt. Bei diesem ist für ein zeitversetztes, gegensinniges Rückspülen das erste Spülglied in Drehrichtung versetzt zu dem zweiten Spülglied angeordnet und dem ersten und zweiten Spülglied ist am gegenüberliegenden Einströmende ein Verschlußglied zugeordnet. Das zeitversetzte, gegensinnige Rückspülen bewirkt eine bessere Reinigung der Filterelemente als im Stand der Technik. Ursache hierfür ist u.a., daß bei diesen Rückspülfiltern mit hoher Spülgeschwindigkeit zeitversetzt, wechselseitig rückgespült wird, so daß sowohl im Bereich der Einströmenden an den Lochplatten, als auch über einen großen Bereich der Höhe der Filterelemente die volle Intensität der Spülwirkung zum Tragen kommen kann.

Aufgabe der Erfindung ist es, einen Rückspülfilter zu schaffen, der bei hoher Filterleistung und kompaktem Aufbau eine hohe Reinigungswirkung im Rückspülbetrieb entfaltet.

Diese Aufgabe wird durch die im Patentanspruch 1 angegebene Erfindung gelöst. Erfindungsgemäß ist vorgesehen, daß das erste Spülküken um einen Winkel in Drehrichtung versetzt zu dem zweiten Spülküken angeordnet ist und dem ersten und zweiten Spülküken für die gegenüberliegenden Filterkerzenendseiten ein mitbewegtes erstes und zweites verschlußglied zugeordnet ist. Durch den Versatz der Spülküken um einen Winkel in Drehrichtung wird ermöglicht, daß die Filterkerzen zeitversetzt an beiden Einströmenden mit dem Spüldruck beaufschlagt werden. Zu einem bestimmten Zeitpunkt ist hierbei das dem (z.B. oberen) Spülküken gegenüberliegende Einströmende mittels des (unteren) Verschlußgliedes verschlossen, so daß sich der aufgebrachte Spülsog in einer Richtung voll entfalten kann. Zeitversetzt hierzu wird die Filterkerze in der anderen Richtung am anderen (unteren) Einströmende rückgespült. In diesem zustand kann sich dann der Spüldruck in der anderen Spülrichtung voll entfalten, da gleichzeitig mit dem zugehörigen Verschlußglied das gegenüberliegende (obere) Einströmende verschlossen ist. Mit dem zeitversetzten, gegensinnigen Rückspülen können höhere Spülgeschwindigkeiten bzw. -geschwindigkeitsprofile über die Filterhöhe erzielt werden, so daß insbesondere in mittleren Bereichen zwischen den Einströmenden aufgrund der dort wirkenden höheren Spülgeschwindigkeiten eine verbesserte Spülwirkung erzielt wird. Erfindungsgemäß sind desweiteren an den Filterkerzenenden Kammern aufweisende Umlenkhauben angeordnet und Spülküken und Verschlußglied sind einem innenliegenden Ringflansch der Umlenkhauben zugeordnet. Die Spülküken und Verschlußglieder können dann relativ kurz bauen, da sie sich innerhalb der von den Filterkerzen gebildeten Filterkreisen bzw. der Umlenkhauben bewegen.

Vorzugsweise sind die Einströmenden mehrerer Filterkerzen an eine Kammer angeschlossen. Weiter vorugsweise sind die Umlenkhauben ringförmig ausgebildet. Durch diese Maßnahme können mehrere Filterelemente gruppenweise rückgespült werden, wobei der Verschleiß an der Kontaktfläche zwischen Spülküken und Umlenkhauben trotz der gruppenweisen Rückspülung vergleichsweise gering ist.

Die Kammern sind vorzugsweise gleichmäßig über den Umfang verteilt angeordnet. Die Spülküken und Verschlußglieder können hierbei vorzugsweise derart ausgebildet sein, daß sie eine Kammer am Ringflansch vollständig abdecken, so daß sich nur die an eine der Kammern angeschlossenen Filterkerzen im Rückspülbetrieb befinden, während sämtliche anderen Kammern bzw. Filterkerzen für den Filtrierbetrieb zur Verfügung stehen.

Da bei den erfindungsgemäßen Rüclspülfiltern ein weiteres Spülküken am gegenüberliegenden Einströmende angeordnet ist, ist vorzugsweise das erste Spülküken derart versetzt zum zweiten Spülküken angeordnet, daß bei bestimmten Drehwinkeln jeweils nur eines der Spülküken für den Rückspülbetrieb aktiv ist, während das andere Spülküken inaktiv ist. Durch diese Maßnahme steht der über das Ablaßventil aufgebrachte Spüldruck vollständig für die Rückspülung der einer einzigen Kammer zugeordneten Filterkerze zur Verfügung. Vorzugsweise verschließt hierbei das gerade inaktive Spülküken dann keine Kammer, damit die sich nahe des inaktiven Spülkükens befindlichen Filterkerzen bzw. Kammern noch für den Filtrierbetrieb zur Verfügung stehen. Diese Vorteile lassen sich insbesondere dann erzielen, wenn die Spülküken radiale Spülkükenöffnungen aufweisen, deren Öffnungsbreite in Drehrichtung kleiner als die Öffnungsbreite der Kammern am Radialflansch der Umlenkhauben ist und die Öffnungsbreite der Kükenöffnungen gleich oder kleiner als die Breite der Kammerbegrenzungswände am Ringflansch ist. Mit den Kammerbegrenzungswänden können dann die Kükenöffnungen verschlossen werden, so daß die Spülküken in der entsprechenden Drehstellung inaktiv sind.

Ein konstruktiv einfacher Aufbau ergibt sich, wenn jeweils ein Spülküken und ein Verschlußglied die entgegengesetzten Enden eines Spülarms bilden, wobei zwischen Spülküken und Verschlußglied eines Spülarmes ein Versatzwinkel angeordnet ist. Der Versatzwinkel zwischen Spülküken und Verschlußglied bestimmt mithin den Winkel zwischen den beiden Spülküken. Vorzugsweise entspricht der Versatzwinkel zwischen Spülküken und Verschlußglied eines Spülarms dem halben Öffnungswinkel einer Kammer oder einem ganzzahligen Vielfachen hiervon, so daß, wenn das erste Spülküken eine Kammer vollständig abdeckt, das andere Spülküken gerade mittig zwischen zwei Kammern liegt, mithin die radiale, mittig angeordnete Spülkükenöffnung durch die Begrenzungswand verschlossen werden kann. Die Spülküken können in Drehrichtung breiter als die Verschlußglieder ausgebildet sein, um die Reinigung durch Rückspülung im Querstrom zu unterstützen.

Weitere Vorteile und Ausgestaltungen der Erfindung ergeben sich aus den Unteransprüchen und der nachfolgenden Beschreibung eines das Erfindungsprinzip erläuternden Ausführungsbeispiels.

In der Zeichnung zeigen:
- Fig. 1: schematisch im Längsschnitt durch einen Rückspülfilter das Rückspülen von Filterkerzen am oberen Einströmende;
- Fig. 2: schematisch in Schnittansicht gem. Fig. 1 das zeitversetzte Rückspülen derselben Filterelemente am unteren Einströmende;
- Fig. 3A: schematisch eine Ansicht entlang der Linie A-A in Fig. 1;
- Fig. 3B: schematisch eine Ansicht entlang der Linie B-B in Fig. 1;
- Fig. 4A: schematisch eine Ansicht entlang der Linie C-C in Fig. 2; und
- Fig. 4B: schematisch eine Ansicht entlang der Linie D-D in Fig. 2.

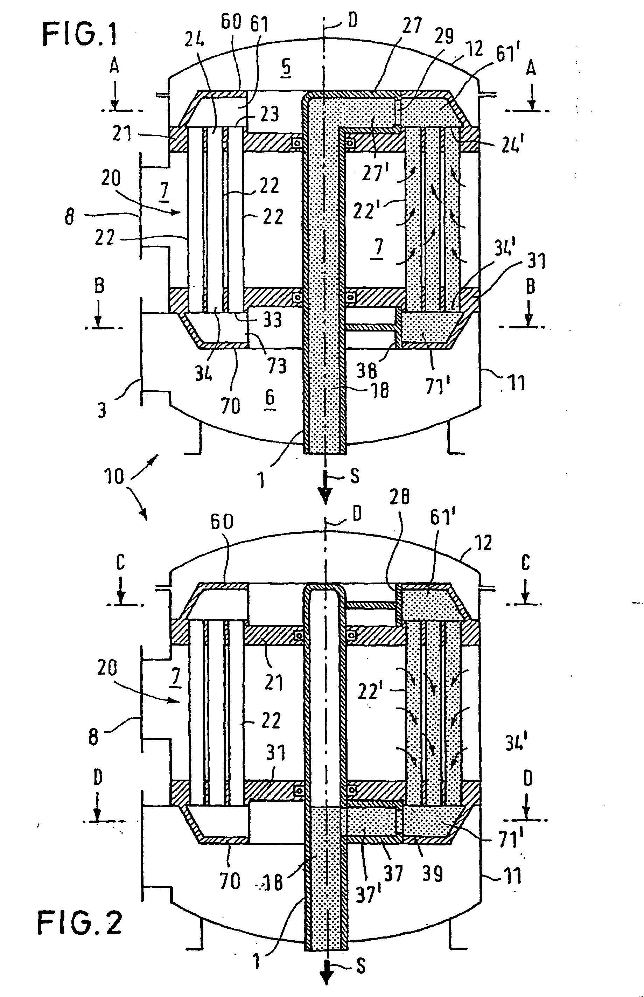

In den Fig. 1 und 2 ist schematisch ein Rückspülfilter 10 mit Filtergehäuse 11 und Gehäusedeckel 12 dargestellt. Im Innenraum von Filtergehäuse 11 und Gehäusedeckel 12 ist ein Filtereinsatz 20 angeordnet, der eine Vielzahl von konzentrisch um eine Dreh- und Filterachse D angeordnete Filterelemente 22, 22' aufweist. Die Filterelemente 22 befinden sich im Filtrierbetrieb, die Filterelemente 22' im Rückspülbetrieb, wie noch erläutert werden wird. Die Filterelemente 22, 22' sind zwischen einer oberen Lochplatte 21 und einer unteren Lochplatte 31 eingespannt, so daß eine zu filternde Trübe, die durch den Filtereinlaß 3 in den Rückspülfilter 10 eintritt, im Filtrierbetrieb in die oberen Einströmenden 24 und die unteren Einströmenden 34 der Filterkerzen 22 einströmt. Die Trübe tritt durch die Filterwände der Filterelemente 22 von innen nach außen hindurch und gelangt als Filtrat in eine Filtratkammer 7, von der aus sie über den Filtratauslaß 8 zu einem Motor od.dgl. zurückgeführt werden kann. Dabei kann die Trübe aus der einlaßseitigen Trübekammer 6 über nicht gezeigte Kanäle bzw. Öffnungen in den Lochplatten 21, 31 in den Gehäusedeckelinnenraum 5 überströmen.

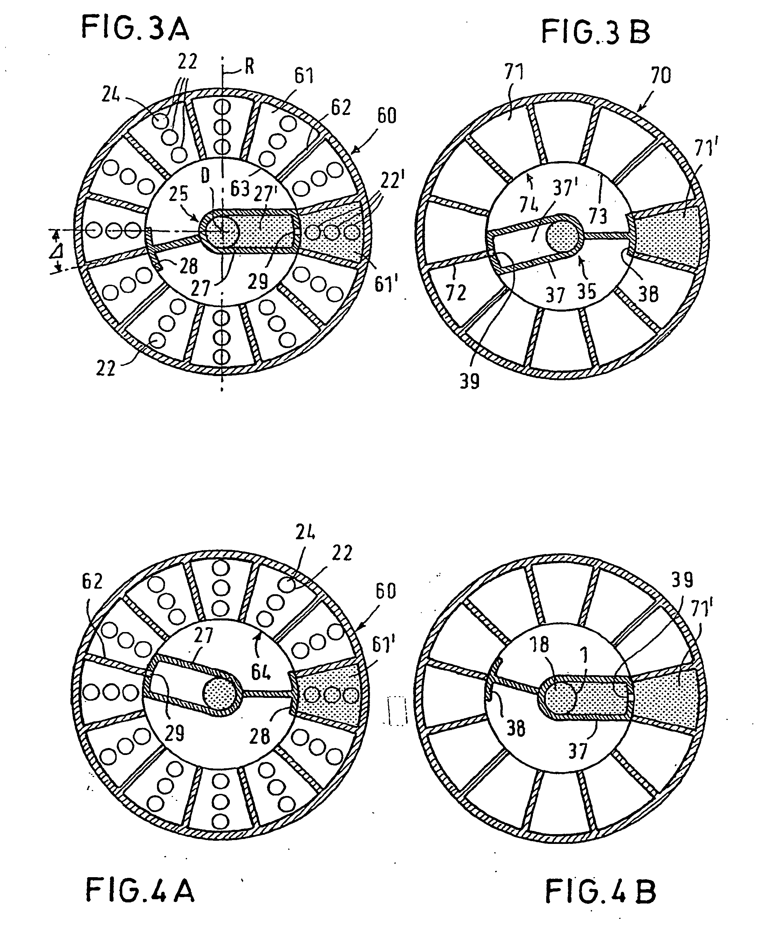

Wie schematisch in den Fig. 1 und 2 gezeigt ist, ist an den oberen bzw. unteren Filterkerzenendenseiten 23, 33 jeweils eine ringförmige obere bzw. untere Umlenkhaube 60, 70 angeordnet, die, wie den Fig. 3A bis 4B zu entnehmen ist, über den Umfang gleichmäßig verteilt mehrere Kammern 61, 61' bzw. 71, 71' aufweist. Die Fig. 3A bis 4B zeigen auch, daß in jeder Kammer 61 bzw. 71 mehrere Filterelemente 22 auf einer Radiallinie R angeordnet sind und daß die einzelnen Filterkammern 61, 71 durch radiale Zwischenbegrenzungswände 62, 72 vollständig voneinander getrennt sind. Die Umlenkhauben 60, 70 bzw. die einzelnen Kammern 61, 61' bzw. 71, 71' sind am radial innen liegenden Ringflansch 63, 73 offen, so daß die Trübe über die Öffnungen 64, 74 am Ringflansch 63, 73 in die Kammern 61, 71 und von dort in die Filterelemente 22 im Filtrierbetrieb eintreten kann.

Wie die Fig. 1 und 2 weiter zeigen, ist zentrisch um die Drehachse D eine Drehwelle 1 drehbar in den Lochplatten 21, 31 gelagert. Die Drehwelle 1 ist hohl, so daß der Hohlabschnitt der Drehwelle 1 eine Schmutzabzugsleitung 18 bilden kann, die über ein nicht dargestelltes Ablaßventil für das Rückspülen der Filterelemente 22' an Umgebungsdruck angeschlossen werden kann. Die Drehwelle 1 ist drehfest mit einem oberen, ersten Spülküken 27 und einem unteren, ersten Verschlußglied 38 (Fig. 1) sowie einem unteren, zweiten Spülküken 37 und einem oberen, zweiten Verschlußglied 28 verbunden. Der Hohlraum 27', 37' der Spülküken 27, 37 ist jeweils mit der Schmutzabzugsleitung 18 verbunden. Die Spülküken 27, 37 und die Verschlußglieder 28, 38 bewegen sich am radial innenliegenden Ringflansch 63, 73 der Umlenkhauben 60, 70 vorbei und können an den Kontaktflächen mit dem Ringflansch 63, 73 mit einem verschleißfesten Belag versehen sein. Die Spülküken 27, 37 weisen jeweils eine radiale Öffnung 29, 39 auf, die sich, wie die Fig. 1 und 2 zeigen, im wesentlichen über die Höhe der Umlenkhauben 60, 70 erstreckt, in Drehrichtung jedoch wesentlich schmaler als die Einlaßöffnungen 64, 74 am Ringflansch 63, 73 der Umlenkhauben 60, 70 ist. Die Breite der Öffnungen 29, 39 in Drehrichtung kann dabei insbesondere, wie Fig. 3B und 4A zeigen, derart gewählt sein, daß die Breite gleich der Breite der Kammerwände 62, 72 ist.

In den Fig. sind solche Bereiche des Rückspülfilters, die sich im Rückspülbetrieb befinden, mit einem Punktraster hinterlegt. In den Fig. 1 und 2 ist mit dem schwarzen Pfeil S der über das Ablaßventil und die Schmutzabzugsleitung 18 aufgebrachte Spülsog angedeutet. Die Fig. 1 und 2 zeigen den Rückspülbetrieb in zeitversetzten Zuständen. In den Fig. 1, 3A und 3B ist ein Zustand gezeigt, in welchem das obere Spülküken 27 die obere Kammer 61', an die die Filterkerzen 22' angeschlossen sind, gegenüber dem Trübestrom abdichtet und mit der Schmutzabzugsleitung verbindet. Durch den Spülsog S wird Filtrat aus der Filtratkammer 7 durch die Wände der Filterelemente 22' hindurch in den Innenraum der Filterelemente 22' hineingesogen, so daß Schmutzpartikel, die sich im Filtrierbetrieb, der in umgekehrter Richtung stattfindet, an den Innenwänden abgelagert haben, gelöst werden. Das Eintreten des Filtrats in den Innenraum ist mit den Pfeilen angedeutet. Das Verschlußglied 38 an der unteren Umlenkhaube 70 verschließt dabei entsprechend die an diese Filterelemente 22' angeschlossene untere Kammer 71', so daß im Zustand in Fig. 1 durch das dem oberen Einströmende 24' gegenüberliegende untere Einströmende 34' keine Trübe in den Filterinnenraum eingesaugt wird.

Die Drehstellung und relative Lage von Spülküken 27 und Verschlußglied 38 zueinander im Zustand nach Fig. 1 geht besonders deutlich aus den Fig. 3A, 3B hervor. Aus diesen Fig. ist insbesondere ersichtlich, daß im Zeitpunkt gemäß Fig. 1 das Verschlußglied 28, das zusammen mit dem Spülküken 27 einen oberen Spülarm 25 bildet, sich in einer Stellung befindet, in der es inaktiv ist, d.h. keine Kammer 61 an der oberen Umlenkhaube 60 verschließt. Das Spülküken 37, das zusammen mit dem Verschlußglied 38 den unteren Spülarm 35 bildet, ist ebenfalls inaktiv, insbesondere befindet sich die Spülkükenöffnung 39 des unteren Spülkükens 37 unmittelbar an der Begrenzungswand 72, so daß das Spülküken 37 verschlossen ist, d.h. durch die Spülkükenöffnung 39 keine Trübe in das Spülküken 37 eintreten kann. Dieser Effekt wird dadurch erzielt, daß Spülküken 27 und Verschlußglied 28 bzw. 37, 38 zwar die gegenüberliegenden Enden des Spülarms 25, 35 ausbilden, jedoch ein Versatzwinkel Δ zwischen diesen ausgebildet ist. Dieser Versatzwinkel Δ entspricht dem halben Öffnungswinkel einer Kammer 61, d.h. im Ausführungsbeispiel mit zwölf Kammern einem Winkel Δ von 15°. Der Winkel, um den die Spülküken 27, 37 zueinander versetzt sind, ist daher entsprechend 165° bzw. 195° in Abhängigkeit von der Drehrichtung.

Die Fig. 2, 4A und 4B zeigen den Zustand der zeitversetzten, gegensinnigen Rückspülung derselben Filterelemente 22' am unteren Einströmende 34'. Die Spülküken werden mittels eines nicht dargestellten, vorzugsweise außerhalb des Filtergehäuses angeordneten oder angeflanschten Antriebs kontinuierlich oder schrittweise gedreht. Das Verschlußglied 28 dichtet nun die obere Kammer 61' gegenüber der Trübe ab, so daß Filtrat aufgrund des über das Spülküken 37 aufgebrachten Spülsogs S durch die Wände der Filterelemente 22' hindurchtritt und die gelösten Ablagerungen über die Kammer 71' und den unteren Bereich der Schmutzleitung 18 zum Ablaßventil befördert werden. Wie zuvor beschrieben wurde, ist in diesem Zustand die Kükenöffnung 29 am oberen Spülküken 27 durch die Begrenzungswand 62 verschlossen, so daß wiederum der volle Spülsog S am unteren Einströmende 34' wirksam ist. Der Spülsog für den Rückspülstrom ist daher pro Zeiteinheit auf eine Kammer 61', 71' bzw. auf eine begrenzte Anzahl von Filterelementen 22' und auf eines ihrer Einströmenden 24' bzw. 34' begrenzt. Die Spülwirkung ist entsprechend groß.

Die zuvor beschriebene Rückspülung im Gegenstrom zur Filtrierrichtung kann noch durch eine Rückspülung mit turbulenter Strömung im Querstrom unterstützt werden, indem das Ablaßventil kurz vor Erreichen der in den Fig. gezeigten Stellung und kurz nach Verlassen der in den Fig. gezeigten Stellungen geöffnet bleibt, so daß kurzzeitig ein Schwall von Trübe in die Kammern und Filterelemente 22' eintritt.

Für den Fachmann ergeben sich eine Reihe von Abweichungen, die in den Schutzbereich fallen sollen. So können die Umlenkhauben und Lochplatten einstückig ausgebildet sein oder die Umlenkhauben sind mit den Lochplatten verschraubbar. Auch bei den Verschlußgliedern und Spülküken kann eine einstückige Ausführungsform oder eine mehrteilige Ausführungsform, ggf. mit drehfest an die Drehwelle ansteckbaren Verschlußarmen gewählt werden. Die Spülküken können in Drehrichtung breiter als die Verschlußglieder ausgebildet sein, so daß im Rückspülbetrieb selbst bei weitergedrehtem Verschlußglied die in die Filterelemente eintretende Trübe noch über die Schmutzabzugsleitung abgesaugt werden kann. Der Versatz zwischen Spülküken und Verschlußglied kann jedem ganzzahligen Vielfachen des angegebenen Versatzwinkels entsprechen, so daß sich dann auch entsprechend der Winkel zwischen den Spülküken ändert. Bei hoher Filterkerzendichte auf einem oder den Filterkreisen können auch mehrere Spülküken für jede Einströmendenseite vorgesehen sein. Die Spülküken am oberen und unteren Einströmende können derart zueinander angeordnet sein, daß unmittelbar nacheinander die Filterkerzen gegensinnig rückgespült werden. Um eine höhere Filterkerzendichte zu erzielen, können auf den äußeren Filterkreisen mehr Filterkerzen als auf den inneren Filterkerzen angeordnet werden.

## Patentansprüche

1. Rückspülfilter insbesondere für die Schmierölfilterung, mit im Filtergehäuse um eine Drehwelle (1) angeordneten, an beiden Enden offenen Filterkerzen (22, 22'), deren Innenraum im Filtrierbetrieb mit einer in den Rückspülfilter einströmenden Trübe beaufschlagbar ist, und mit einer mittels der Drehwelle (1) bewegten Reinigungseinrichtung, die für die Einzel- oder Gruppenreinigung der Filterkerzen im Rückspülbetrieb wenigstens zwei über die Drehwelle mit einem Ablaßventil in Verbindung stehende Spülküken aufweist, wobei das erste Spülküken (27) der einen Filterkerzenendenseite (23) und das andere Spülküken (37) der anderen Filterkerzenendenseite (33) zugeordnet ist, das erste Spülküken (27) um einen Winkel in Drehrichtung versetzt zu dem zweiten Spülküken (37) angeordnet ist und dem ersten und zweiten Spülküken (27, 37) für die gegenüberliegende Filterkerzenendseite (33; 23) ein mitbewegtes erstes und zweites Verschlußglied (28; 38) zugeordnet ist, **dadurch gekennzeichnet, daß** an den Filterkerzenendseiten (23, 33) Kammern (61, 71) aufweisende Umlenkhauben (60, 70) angeordnet sind und Spülküken (27, 37) und Verschlußglied (28, 38) einem radial innenliegenden Ringflansch (63, 73) der Umlenkhauben (60, 70) zugeordnet sind.

2. Rückspülfilter nach Anspruch 1, **dadurch gekennzeichnet, daß,** die Einströmenden (24, 34) mehrerer Filterkerzen (22) an eine Kammer (61, 71) angeschlossen sind.

3. RückBpülfilter nach Anspruch 1 oder 2, **dadurch gekennzeichnet, daß** die Umlenkhauben (60, 70) ringförmig ausgebildet sind.

4. Rückspülfilter nach einem der Ansprüche 1 bis 3, **dadurch gekennzeichnet, daß** die Kammern (60, 70) gleichmäßig über den Umfang verteilt angeordnet sind.

5. Rückspülfilter nach einem der Ansprüche 1 bis 4, d**adurch gekennzeichnet, daß** die Spülküken (27, 37) und Verschlußglieder (28, 38) ausgebildet sind, die Öffnung (64; 74) einer Kammer (61, 71) am Ringflansch (63, 73) vollständig abzudecken.

6. Rückspülfilter nach einem der Ansprüche 1 bis 5, **dadurch gekennzeichnet, daß** das erste Spülküken (27) derart versetzt zum zweiten Spülküken (37) angeordnet ist, daß bei bestimmten Drehzuständen jeweils nur eines der Spülküken (27; 37) für den Rückspülbetrieb aktiv ist, während das andere Spülküken (37; 27) inaktiv ist.

7. Rückspülfilter nach einem der Ansprüche 1 bis 6, **dadurch gekennzeichnet, daß** die Spülküken (27, 37) radiale Spülkükenöffnungen (29, 39) aufweisen, deren Öffnungsbreite in Drehrichtung kleiner als die Öffnungsbreite der Kammeröffnung (64;74) am Radialflansch (63, 73) der Umlenkhauben (60, 70) ist.

8. Rückspülfilter nach Anspruch 7, **dadurch gekennzeichnet, daß** die Öffnungsbreite der Kükenöffnungen (29, 39) gleich oder kleiner als die Breite der Kammerbegrenzungswände (62, 72) am Ringflansch (63, 73) ist.

9. Rückspülfilter nach einem der Ansprüche 1 bis 8, **dadurch gekennzeichnet, daß** jeweils ein Spülküken (27; 37) und ein Verschlußglied (28; 38) die entgegengesetzten Enden eines Spülarms (25, 35) bilden, wobei zwischen Spülküken (27, 37) und Verschlußglied (28, 38) eines Spülarms (25, 35) ein Versatzwinkel (Δ) vorgesehen ist.

10. Rückspülfilter nach Anspruch 9, **dadurch gekennzeichnet, daß** der Versatzwinkel (Δ) dem halben Öffnungswinkel einer Kammer (61, 71) oder einem ganzzahligen Vielfachen hiervon entspricht.

11. Rückspülfilter nach einem der Ansprüche 1 bis 10, **dadurch gekennzeichnet, daß** das erste Spülküken (27) und das erste Verschlußglied (38) bei der Drehbewegung gleichzeitig denselben Filterkerzen (22') bzw, zugehörigen Kammern (61', 71') zugeordnet sind.

12. Rückspülfilter nach einem der Ansprüche 1 bis 11, **dadurch gekennzeichnet, daß** das erste und das zweite Spülküken (27, 37) an eine gemeinsame hohle, zentrale Drehwelle (1) angeschlossen sind.

13. Rückspülfilter nach einem der Ansprüche 1 bis 12, **dadurch gekennzeichnet, daß** mit der Reinigungseinrichtung die Filterkerzen (22') periodisch wechselseitig und gegensinnig rückspülbar sind.

14. Rückspülfilter nach einem der Ansprüche 1 bis 13, **dadurch gekennzeichnet, daß** die an einer Kammer (61, 71) angeschlossenen Filterkerzen (22) im wesentlichen auf einer Radiallinie (R) angeordnet sind.

15. Rückspülfilter nach einem der Ansprüche 1 bis 14, **dadurch gekennzeichnet, daß** die Spülküken in Drehrichtung breiter als die Verschlußglieder ausgebildet sind.

## Claims

1. Backflush filter, in particular for the filtration of lubricating oil, comprising filter candles (22, 22') which are open at both ends and which are arranged around a rotary shaft (1) in the filter housing, the interior space of which filter candles can be acted upon in filtration operation by a sludge flowing into the backflush filter, and comprising a cleaning device which is moved by means of the rotary shaft (1) and which comprises at least two flushing cocks which communicate with an outlet valve via the rotary shaft for cleaning the filter candles individually or in groups during a backflush operation, where the first flushing cock (27) is associated with one filter candle end face (23) and the other flushing cock (37) is associated with the other filter candle end face (33), the first flushing cock (27) is offset by an angle in the direction of rotation in relation to the second flushing cock (37) and a first and a second closure element (28; 38) for the opposite filter candle end face (33; 23) are associated with the first and second flushing cocks (27, 37) and are moved in conjunction therewith, **characterised in that** deflection hoods (60, 70) comprising chambers (61, 71) are arranged at the filter candle end faces (23, 33), and flushing cocks (27, 37) and a closure element (28, 38) are associated with an radially inner annular flange (63, 73) of the deflection hoods (60, 70).

2. Backflush filter according to claim 1, **characterised in that** the inflow ends (24, 34) of several filter candles (22) are connected to a chamber (61, 71).

3. Bacldiush filter according to claim 1 or 2, **characterised in that** the deflection hoods (60, 70) are of annular construction.

4. Backflush filter according to one of claims 1 to 3, **characterised in that** the chambers (60, 70) are arranged in a uniformly distributed manner over the periphery.

5. Backflush filter according to one of claims 1 to 4, **characterised in that** the flushing cocks (27, 37) and closure elements (28, 38) are formed so as to completely cover the opening (64; 74) of a chamber (61, 71) at the annular flange (63, 73).

6. Hackflush filter according to one of claims 1 to 5, **characterised in that** the first flushing cock (27) is offset in relation to the second flushing cock (37) in such a manner that at defined states of rotation only one of each of the flushing cocks (27; 37) is active for the backflush operation, whilst the other flushing cock (37; 27) is inactive.

7. Backflush filter according to one of claims 1 to 6, **characterised in that** the flushing cocks (27, 37) comprise radial flushing cock openings (29, 39), the opening width of which in the direction of rotation is less than the opening width of the chamber opening (64; 74) at the radial flange (63; 73) of the deflection hoods (60, 70).

8. Backflush filter according to claim 7, **characterised in that** the opening width of the cock openings (29, 39) is equal to or smaller than the width of the chamber limiting walls (62, 72) at the annular flange (63, 73).

9. Backflush filter according to one of claims 1 to 8, **characterised in that** a flushing cock (27; 37) and a closure element (28; 38) each form the opposite ends of a flushing arm (25, 35), whereby an offset angle Δ is provided between the flushing cock (27, 37) and the closure element (28, 38) of a flushing arm (25, 35).

10. Backflush filter according to claim 9, **characterised in that** the offset angle (Δ) corresponds to half the opening angle of a chamber (61,71) or to an integral multiple thereof.

11. Backflush filter according to one of claims 1 to 10, **characterised in that** the first flushing cock (27) and the first closure element (38) are simultaneously associated with the same filter candles (22') or with associated chambers (61', 71') during the rotary movement.

12. Backflush filter according to one of claims 1 to 11, **characterised in that** the first and second flushing cocks (27, 37) are attached to a common hollow, central rotary shaft (1).

13. Backflush filter according to one of claims 1 to 12, **characterised in that** the filter candles (22') can be periodically and alternately backflushed in opposite directions by the cleaning device.

14. Backflush filter according to one of claims 1 to 13, **characterised in that** the filter candles (22) which are attached to a chamber (61, 71) are disposed essentially on a radial line (R).

15. Backflush filter according to one of claims 1 to 14, **characterised in that** the flushing cocks are made wider than the closure elements in the direction of rotation.

## Revendications

1. Filtre à lavage à contre-courant, notamment destiné à la filtration d'huile de lubrification, comprenant des bougies filtrantes (22, 22') ouvertes aux deux extrémités, agencées dans le boîtier de filtre autour d'un arbre rotatif (1), bougies dont l'espace intérieur peut recevoir lors du fonctionnement en filtration un fluide à filtrer pénétrant dans le filtre à lavage à contre-courant, lequel comprend encore un dispositif de nettoyage mis en mouvement au moyen de l'arbre rotatif (1) et qui comprend pour le nettoyage individuel ou par groupes des bougies filtrantes lors du fonctionnement en lavage à contre-courant au moins deux boisseaux reliés à une soupape de sortie par l'intermédiaire de l'arbre rotatif, le premier boisseau de lavage (27) étant associé à un côté (23) des extrémités de bougies filtrantes et l'autre boisseau de lavage (37) à l'autre côté (33) des extrémités de bougies filtrantes, le premier boisseau de lavage (27) étant agencé avec un décalage d'un certain angle dans la direction de rotation par rapport au deuxième boisseau de lavage (37), et il est associé aux premier et deuxième boisseaux de lavage (27, 37) pour le côté opposé des extrémités de bougies filtrantes (33 ; 23) un premier et un deuxième obturateur (28, 38) se déplaçant simultanément, **caractérisé en ce que** des culasses déflectrices (60, 70) présentant des chambres (61, 71) sont agencées sur les côtés d'extrémité des bougies filtrantes (23, 33), et les boisseau de lavage (27, 37) et obturateur (28, 38) sont associés à un collet annulaire (63, 73) des culasses déflectrices (60, 70), situé radialement à l'intérieur.

2. Filtre à lavage à contre-courant selon la revendication 1, **caractérisé en ce que** les extrémités d'entrée (24, 34) de plusieurs bougies filtrantes (22) sont raccordées à une même chambre (61, 71).

3. Filtre à lavage à contre-courant selon la revendication 1 ou 2, **caractérisé en ce que** les culasses déflectrices (69, 70) sont réalisées annulaires.

4. Filtre à lavage à contre-courant selon l'une des revendications 1 à 3, **caractérisé en ce que en ce que** les chambres (60, 70) sont agencées en répartition régulière sur le pourtour.

5. Filtre à lavage à contre-courant selon l'une des revendications 1 à 4, **caractérisé en ce que** les boisseau de lavage (27, 37) et obturateur (28, 38) sont réalisés pour recouvrir complètement l'ouverture (64 ; 74) d'une chambre (61, 71) sur le collet annulaire (63, 73).

6. Filtre à lavage à contre-courant selon l'une des revendications 1 à 5, **caractérisé en ce que** le premier boisseau de lavage (27) est agencé avec un décalage tel par rapport au deuxième boisseau de lavage (37) que dans des états rotatifs déterminés il n'y a pour chacun d'eux qu'un seul des boisseaux de lavage (27 ; 37) qui est actif pour le fonctionnement en lavage à contre-courant, tandis que l'autre boisseau de lavage (37 ; 27) est inactif.

7. Filtre à lavage à contre-courant selon l'une des revendications 1 à 6, **caractérisé en ce que** les boisseaux de lavage (27, 37) présentent des ouvertures (29, 39) de boisseau de lavage radiales présentant dans la direction de rotation une largeur d'ouverture plus petite que la largeur d'ouverture de l'ouverture de chambre (64 ; 74) sur le collet radial (63, 73) des culasses déflectrices (60, 70).

8. Filtre à lavage à contre-courant selon la revendication 7, **caractérisé en ce que** la largeur d'ouverture des ouvertures de boisseaux (29, 39) est égale ou inférieure à la largeur des parois (62, 72) délimitant les chambres sur le collet annulaire (63, 73).

9. Filtre à lavage à contre-courant selon l'une des revendications 1 à 8, **caractérisé en ce qu'**un boisseau de lavage (27 ; 37) et un obturateur (28 ; 38) constituent, respectivement; les extrémités opposées d'un bras de lavage (25, 35), et il est prévu un angle de décalage (Δ) entre boisseau de lavage (27, 37) et obturateur (28, 38) d'un même bras de lavage (25, 35).

10. Filtre à lavage à contre-courant selon la revendication 9, **caractérisé en ce que** l'angle de décalage (Δ) correspond au demi-angle d'ouverture d'une chambre (61, 71) ou à un multiple entier de cela.

11. Filtre à lavage à contre-courant selon l'une des revendications 1 à 10, **caractérisé en ce que** le premier boisseau de lavage (27) et le premier obturateur (38) sont, dans le mouvement de rotation, simultanément associés aux mêmes bougies filtrantes (22') et respectivement chambres associées (61', 71').

12. Filtre à lavage à contre-courant selon l'une des revendications 1 à 11, **caractérisé en ce que** le premier et le deuxième boisseau de lavage (27, 37) sont raccordés à un arbre rotatif central creux commun (1).

13. Filtre à lavage à contre-courant selon l'une des revendications 1 à 12, **caractérisé en ce que** le dispositif de nettoyage permet de nettoyer les bougies filtrantes (22') à contre-courant, périodiquement d'un côté et alternativement de l'autre et en sens contraires.

14. Filtre à lavage à contre-courant selon l'une des revendications 1 à 13, **caractérisé en ce que** les bougies filtrantes (22) raccordées à une même chambre (61, 71) sont sensiblement disposées sur une ligne radiale (R).

15. Filtre à lavage à contre-courant selon l'une des revendications 1 à 14, **caractérisé en ce que** les boisseaux de lavage sont réalisés plus larges que les obturateurs dans la direction de rotation.
